(19) Europäisches Patentamt
European Patent Office
Office européen des brevets

(11) EP 4 589 829 A1

(12) EUROPEAN PATENT APPLICATION

(43) Date of publication:
23.07.2025 Bulletin 2025/30

(21) Application number: 24152198.8

(22) Date of filing: 16.01.2024

(51) International Patent Classification (IPC):
H02M 3/00 (2006.01)        H02M 3/335 (2006.01)

(52) Cooperative Patent Classification (CPC):
H02M 3/01; H02M 3/33573

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Hamilton Sundstrand Corporation
Charlotte, NC 28217 (US)

(72) Inventors:
• LEFLEY, Paul W.
Lutterworth LE17 4FD (GB)
• BENN, Andrew
Kenilworth CV8 1DA (GB)

(74) Representative: Dehns
10 Old Bailey
London EC4M 7NG (GB)

(54) **DC-DC RESONANT POWER CONVERTER**

(57) A resonant circuit is provided for a DC-DC power converter, the resonant circuit comprising: a resonant inductance and a resonant capacitance, the resonant capacitance provided by two capacitors configured to be connected in series to an input switching stage of a DC-DC power converter, and the resonant inductance comprising a resonant inductor connected in series with a first of the capacitors. A DC-DC power converter is also provided comprising: an input DC voltage bus; an input switching stage connected across the input DC bus; the resonant circuit; a voltage converter; and an output rectifier stage; wherein the voltage converter comprises an auto transformer having an input side inductance comprising a first inductance part (P11) and a second inductance part (P21) in series and a tap output between the first and second inductance part, wherein the voltage converter has a conversion ratio of (P11 +P21)/P21.

Figure 3

## Description

TECHNICAL FIELD

The present disclosure relates to a DC-DC resonant power converter.

BACKGROUND

Power converters are used in many applications to provide an appropriate level of power to drive one or more loads from a power source. The power can be inverted, converted, stepped up or stepped down, as required to drive the loads in question. Typically, a power converter for loads such as electronic devices, electrical vehicles and other loads will include a DC-DC stage to derive appropriate DC drive voltage output levels for the loads to be driven. In recent times, DC power converter or power distribution systems have overtaken AC power distribution systems in many applications e.g. in aircraft applications, especially as the trend has been to more electric aircraft (MEA) or all electric aircraft (AEA), due to their high efficiency and high power density (and thus lower weight and smaller size), among other things.

DC power distribution systems use a high voltage DC bus and the converter stage converts the high voltage bus into lower DC voltages for the loads to be driven. Higher and higher bus voltages are becoming possible in many applications, with the possibility of buses in e.g. aircraft applications increasing in the near future from 540 Vdc to 3kVdc. For high power applications, there is a trend to increase the bus voltage to reduce overall losses in the system. As DC bus voltages increase, there is an advantage in multilevel and modular power converters that can be easily adapted to the increased bus voltage.

Conventionally, PWM power converters operating in switched-mode operation were used for DC-DC conversion. Such converters, however, due to having to switch their currents within the turn-on and turn-off times of the switches, caused undesirable voltage and current stresses, had poor conversion efficiency and reliability, and high switching losses.

More recently, and particularly with advances in semiconductor switching technology, resonant converters have been used to reduce switching losses and improve conversion efficiency. With resonant converters, the active switch device is switched with zero current or zero voltage at its terminals, thus significantly reducing switching losses.

There are two main types of resonant converter- the series resonant converter and the parallel resonant converter, having a resonant tank used to create lossless conditions for lossless turn-on and turn-off of the semiconductor switches. Generally, when the switching frequency is in the region of the resonant frequency, the switches turn on at zero voltage or current condition which eliminates switching losses. To regulate the output voltage, the switching frequency is varied.

Conventionally, DC - DC power converters use a transformer for voltage conversion or impedance matching, based on the ratio of turns between the primary winding and the secondary winding. It is also useful to use a transformer as this also functions to provide galvanic isolation between the input side and the output side of the power converter. Such transformers, though, are relatively large, heavy and expensive.

There is a desire to provide a DC - DC power converter that retains the benefits of the LLC resonant circuit and the power conversion/impedance matching and galvanic isolation functions of the transformer in a simpler, lighter and smaller device.

SUMMARY

According to the disclosure, there is provided a resonant circuit for a DC-DC power converter, the resonant circuit comprising: a resonant inductance and a resonant capacitance, the resonant capacitance provided by two capacitors configured to be connected in series to an input switching stage of a DC-DC power converter, and the resonant inductance comprising a resonant inductor connected in series with a first of the capacitors.

A DC-DC power converter is also provided comprising: an input DC voltage bus; an input switching stage connected across the input DC bus; the resonant circuit; a voltage converter; and an output rectifier stage; wherein the voltage converter comprises an auto transformer having an input side inductance comprising a first inductance part (P11) and a second inductance part (P21) in series and a tap output between the first and second inductance part, wherein the voltage converter has a conversion ratio of (P11+P21)/P21.

The capacitance of each of the two capacitors may be substantially equal.

One of the two capacitors may be connected in a feed path from the input switching stage and the other of the two capacitors may be connected in a return path to the input switching stage.

The input switching stage may comprise, e.g. a full bridge inverter or a half-bridge configuration.

The output rectifier stage may e.g. have a full bridge configuration or a half-bridge configuration.

The second inductance part may be configured to carry a smaller current than the first inductance part.

The input switching stage and/or the output rectifier stage may comprise MOSFET switches.

A DC capacitor may be connected across the DC voltage bus on an input side of the input switching stage.

A DC smoothing capacitor may be provided on an output side of the output rectifier stage.

BRIEF DESCRIPTION

Examples according to the disclosure will now be described with reference to the drawings. It should be noted that variations are possible within the scope of the claims.

Figure 1 shows an example of a known DC-DC LLC resonant converter topology.

Figure 2 shows a first step in modifying the resonant circuit according to the disclosure.

Figure 3 shows a DC-DC power converter according to the disclosure.

DETAILED DESCRIPTION

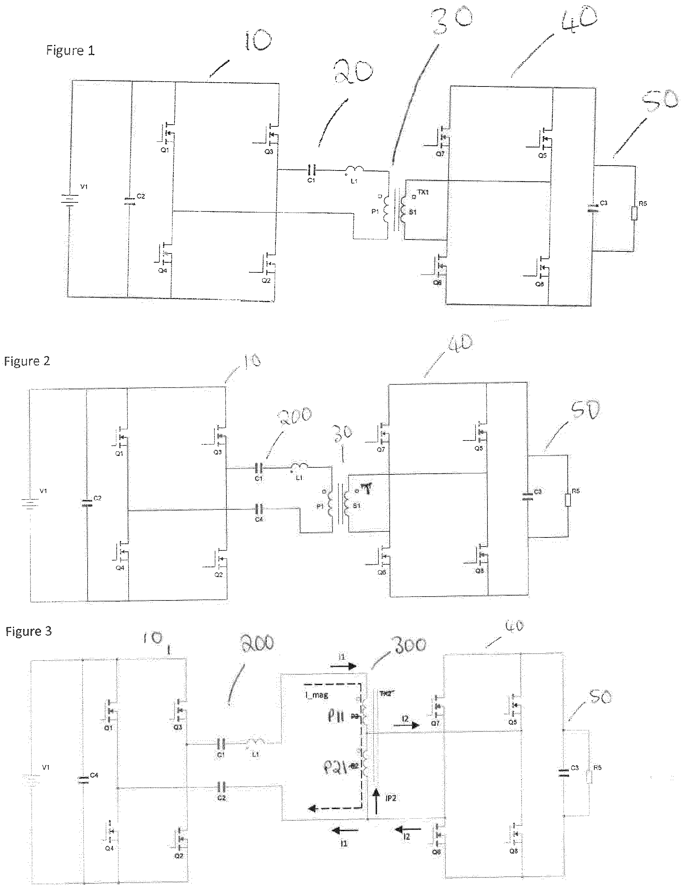

A DC distribution network generally consists of a number of DC-DC power converters and different DC loads having different power requirements. The DC converters implement voltage or current conversion to deliver the desired power to the loads. Various types of converter are known, but for many applications, resonant converters are preferred for the reasons discussed above. Resonant converters contain resonant networks including one or more inductors and one or more capacitors. Series resonant converters such as LLC power converters are used in various power source applications. A conventional DC-DC power converter with an LLC resonant converter is shown in Fig. 1 and includes a DC power supply V1 and DC capacitor C2, an input stage switching bridge 10, a resonant tank 20, here comprising a capacitor C1 and inductor L1 and a transformer 30 with a magnetizing inductance, an output switching stage 40 and a DC load output stage 50 with DC capacitor C3 and load R5. The input stage switching bridge comprises a number of series-connected semiconductors, e.g. MOSFET, switches Q1, Q2, Q3, Q4 connected across the DC Voltage bus V1. In the example shown, the input switching bridge is a full bridge inverter, but other forms of bridge with different numbers of switching stages, e.g. a half-bridge, may also be used. The input switching bridge, by switching the switches Q1, Q2, Q3, Q4 at a selected frequency by operation of a gate driver (not shown) will generate a square wave to excite the resonant tank 20.

In this example, the resonant tank is represented as a series connected resonant capacitor C1 and leakage inductance L1. The resonant frequency of the tank is F1, where:

$$F1 = \frac{1}{2\pi\sqrt{L1C1}}$$

The resonant tank 20 outputs a sinusoidal current from the input square wave.

In this example, the second inductance i.e. the magnetizing inductance of the resonant circuit is combined with the transformer. It is also possible to have a separate inductor in series with the transformer. The transformer 30 receives the sinusoidal current from the resonant tank 20 and scales the current and voltage according to the ratio, n, of turns of the transformer coils. The transformer 30 has a primary winding P1 and a secondary winding P2 which are electrically isolated from each other, but magnetically coupled by the transformer core T. The magnetizing inductance is an inherent property of the winding P1. The leakage inductance L1 is an inherent property of the transformer, where there is not a perfect magnetic coupling between P1 and S1. The leakage inductance is a series component and may include L1.

The stepped-down voltage is then rectified by the output switching or rectifier stage 40. In the example shown, the output switching or rectifier stage 40 is also a full bridge rectifier having four solid state, e.g. MOSFET, switches Q5, Q6, Q7, Q8 but, again, other rectifier topologies can be used as are known in the art. The DC output stage 50, represented here as a DC smoothing capacitor $C_3$ and load resistor R5 filters the rectified AC current to provide a DC output voltage.

Galvanic isolation of the high voltage load is also important to ensure proper grounding protection and safety. Hence, using a transformer to isolate the high voltage side of the LLC converter from the low voltage side of the LLC converter may provide a safer LLC converter design. The function of the transformer is, therefore, twofold: to provide voltage conversion or impedance matching based on the ratio of turns in the primary and secondary windings, and to provide DC galvanic isolation between the input stage and the output stage.

The transformer, particularly for high power applications, typically has a ferrous core and this, with the windings, results in a large, heavy component in the DC-DC power converter.

It is desirable to retain the benefits of the LLC resonant circuit and the functions of the transformer in a simple, lighter and smaller device.

The solution provided in this disclosure is to remove the conventional transformer and to provide the galvanic isolation using capacitors, which are smaller, lighter, less expensive components.

The first step to modifying the conventional design can be seen in Fig. 2, where the galvanic isolation can be achieved by modifying the resonant circuit 200 and splitting the resonant capacitance C1 into two series connected capacitors C1, C4. The single resonant inductor L1 is retained. The value of each capacitor will be twice the value of the conventional LLC resonant capacitor C1 (because they are connected in series). The capacitors C1 and C4 are connected to the output of the input switching stage such that there is no DC path between the input switching stage and the output switching stage. In the case of a full bridge input switching stage, the capacitors are each connected to a respective half bridge output of the input switching stage, as shown in Fig. 2. If the switching stage is a half bridge, one capacitor would be placed at the output and the other would be placed in the DC return path.

Now that the transformer is not needed for galvanic isolation, the large, ferromagnetic core transformer is replaced, as shown in Fig. 3, by a smaller component 300 that is able to provide the voltage conversion or impedance matching function. This may be e.g. a tapped inductor or an auto-transformer having two series-connected windings P11 and P21. The inductance of P21 equals the inductance of the secondary winding P2 of the conventional transformer. The sum of the inductances of P11 + P21 equals the inductance of the replaced primary winding P1. This results in the same voltage conversion result as for the circuit of Fig. 1. The operation of the DC-DC converter will therefore be the same as the conventional LLC and transformer converter of Fig. 1.

The explanation for the equivalent functioning of the tapped inductor compared to the conventional transformer with primary and secondary windings is that the number of turns and the inductances that the resonant circuit 'sees' remain the same for the two configurations. For an example where the transformer voltage conversion ratio is to be 3:2, with the conventional transformer, this may be provided with a ratio of primary turns P1 to secondary turns S1 of e.g. 9:6. With the auto-transformer or tapped inductance as shown in Fig. 3, P21 will have the same number of turns as the replaced secondary winding S2 - i.e. 6 turns, but the previous primary winding P1 is replaced by the sum of P11 and P21, and so P11 would then only have 3 turns. The inductance is tapped at the point between the two inductances P11 and P21 and so the ratio is still 9 (i.e. P11 + P21):6 (P21 alone) - i.e. 3:2. In other words, the 6 turns of P21 are essentially shared by the primary and the secondary windings of the auto transformer 300 and no secondary side is required.

Further, only the turns associated with the first inductor P11 carry the same current as would normally be carried by the primary winding P1. Winding P21 carries considerably less current and can, therefore, be a much smaller part than P11, using much less copper and core material.

It has been found that with this DC-DC power converter design, losses are equivalent to the conventional design LLC circuit. In a zero load situation, the current in each of P11 and P21 is the same. As load increases, the output current comprises two components according to Kirchoff's First Law, with a first component from the first winding part P11 and a second component from the second winding part P21, and that the current in P21 increases at a much lower rate than that in P11.

The current paths can be seen in Fig. 3. I2 is the load current, I1 is an induced current as a direct result of I2, and I_mag is the magnetising current of the auto-transformer and is independent of I2. The current in winding part P21, shown as IP2, is the vector sum of all of the current vectors in P21 i.e. the vector sum of the induced current vector, the load current vector and the magnetising current vector in P21 -

$$\overrightarrow{IP2} = \overrightarrow{I1} + \overrightarrow{I2} + \overrightarrow{I\_mag}$$

The resulting magnitude of current in P21 is, therefore,

$$\sqrt{(I2 - I1)^2 + I\_mag^2}.$$

This means is that the current in P21 can be less than the current in P11 especially when the transformer primary to secondary turns ratio approach 1:1, i.e. a minimum equal to I_mag.

The design according to this disclosure therefore replaces the large transformer having a relatively large primary and secondary winding and ferrous core with a primary winding having two winding sections and a tapping point, and wherein one of those sections P21 can be relatively small and require less winding and core material, and by adding one extra capacitor, the size, cost and weight of which is not significant. The power-to-weight ratio of the DC-DC converter is, therefore, considerably increased, low losses are maintained and the arrangement is simple and relatively inexpensive.

**Claims**

1. A resonant circuit for a DC-DC power converter, the resonant circuit comprising:
   a resonant inductance and a resonant capacitance, the resonant capacitance provided by two capacitors configured to be connected in series to an input switching stage of a DC-DC power converter, and the resonant inductance comprising a resonant inductor connected in series with a first of the capacitors.

2. A DC-DC power converter comprising:

   an input DC voltage bus;
   an input switching stage connected across the input DC bus;
   a resonant circuit as claimed in claim 1;
   a voltage converter; and
   an output rectifier stage;
   wherein the voltage converter comprises an auto transformer having an input side inductance comprising a first inductance part (P11) and a second inductance part (P21) in series and a tap output between the first and second inductance part, wherein the voltage converter has a conversion ratio of (P11+P21)/P21.

3. A DC-DC power converter as claimed in claim 2, wherein the capacitance of each of the two capacitors is substantially equal.

4. A DC-DC power converter as claimed in claim 2 or 3, wherein one of the two capacitors is connected in a feed path from the input switching stage and the other of the two capacitors is connected in a return path to the input switching stage.

5. A DC-DC power converter as claimed in any of claims 2 to 4, wherein the input switching stage comprises a full bridge inverter.

6. A DC-DC power converter as claimed in any of claims 2 to 4, wherein the input switching stage comprises a half-bridge configuration.

7. A DC-DC power converter as claimed in any of claims 2 to 6, wherein the output rectifier stage has a full bridge configuration.

8. A DC-DC power converter as claimed in any of claims 2 to 6, wherein the output rectifier stage has a half-bridge configuration.

9. A DC-DC power converter as claimed in any of claims 2 to 8, wherein the second inductance part is configured to carry a smaller current than the first inductance part.

10. A DC-DC power converter as claimed in any of claims 2 to 9, wherein the input switching stage comprises MOSFET switches.

11. A DC-DC power converter as claimed in any of claims 2 to 10,
wherein the output rectifier stage comprises MOSFET switches.

12. A DC-DC power converter as claimed in any of claims 2 to 11, further comprising a DC capacitor across the DC voltage bus on an input side of the input switching stage.

13. A DC-DC power converter as claimed in any of claims 2 to 12, further comprising a DC smoothing capacitor on an output side of the output rectifier stage.

Figure 1

Figure 2

Figure 3

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 836 228 B2 (XU MING [CN]; LI XINLEI [CN] ET AL.) 16 September 2014 (2014-09-16) * figure 7 * | 1-13 | INV. H02M3/00 H02M3/335 |
| A | US 2023/040992 A1 (WEI CHEN [CN] ET AL) 9 February 2023 (2023-02-09) * figures 9A-9F * | 1-13 | |
| A | US 2022/321016 A1 (KHALIGH ALIREZA [US] ET AL) 6 October 2022 (2022-10-06) * figure 6a * | 1-13 | |

TECHNICAL FIELDS
SEARCHED (IPC)

H02M

The present search report has been drawn up for all claims

| Place of search | Date of completion of the search | Examiner |
|---|---|---|
| The Hague | 13 June 2024 | Magnanimo, Antonio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 2198

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | | Publication date |
|---|---|---|---|---|---|
| US 8836228 | B2 | 16-09-2014 | CN | 102158096 A | 17-08-2011 |
| | | | TW | 201246771 A | 16-11-2012 |
| | | | US | 2012287678 A1 | 15-11-2012 |
| US 2023040992 | A1 | 09-02-2023 | CN | 115280659 A | 01-11-2022 |
| | | | US | 2023040992 A1 | 09-02-2023 |
| | | | WO | 2021127995 A1 | 01-07-2021 |
| US 2022321016 | A1 | 06-10-2022 | NONE | | |

EPO FORM P0459

For more details about this annex : see Official Journal of the European Patent Office, No. 12/82